# DEMANDE DE BREVET EUROPEEN

(11) **EP 0 564 012 A1**
(43) Date de publication de la demande: **06.10.1993**
(21) Numéro de dépôt: 93200569.7
(22) Date de dépôt: 02.03.1993
(51) Int. Cl.: G07F 7/02, G07F 7/00, G07F 7/08, G06K 19/07

(54) **Carte à mémoire électronique avec affichage du solde disponible dans sa mémoire**

(30) Priorité: 16.03.1992 FR 9203119
(71) Demandeur: SCHLUMBERGER INDUSTRIES, F-92120 Montrouge (FR)
(72) Inventeur: Ramatchandirane, Nadaradjane, F-78114 Magny-les-Hameaux (FR); Schaefer, Marc, F-75014 Paris (FR)

(57) **Abrégé**

L'invention concerne une carte à mémoire électronique avec affichage de la consomation du solde disponible dans la mémoire comprenant un corps de carte (12), un module électronique (14) raccordé à une pluralité de plages externes de contact électrique (16, 30), caractérisée en ce qu'elle comprend en outre une pluralité de zones d'affichage (38i) alignées disposées dans une face principale (10) du corps de carte, lesdites zones étant raccordées électriquement à deux bornes de contact électrique (28, 30) accessibles dans ladite face, chaque zone étant telle qu'après l'application d'un signal électrique sur lesdites bornes l'aspect de la zone visible dans ladite face principale soit modifiée de façon permanente, les applications successives de signaux électriques provoquant la modification des zones successives dans l'ordre où elles sont alignées.

## Description

La présente invention a pour objet une carte à mémoire électronique munie de moyens d'affichage de la consommation du solde disponible dans sa mémoire.

Il existe un grand nombre d'installations qui permettent d'obtenir à l'aide d'une carte à mémoire électronique la fourniture de prestations telles que des téléphones publics à carte, des parcmètres à carte, etc.... L'usager achète auprès de l'organisme fournisseur de prestations une carte à mémoire électronique dans laquelle est chargée initialement une certaine valeur fiduciaire. L'installation comprend d'une part un dispositif de traitement de la carte à mémoire, en général appelée lecteur, et d'autre part une machine de fourniture de la prestation commandée par le dispositif de traitement. Cette prestation peut être par exemple l'établissement d'une communication téléphonique. Deux cas peuvent se présenter : soit, comme dans le cas du téléphone, le détenteur de la carte utilise la prestation et le dispositif de traitement débite dans la mémorie de la carte le montant correspondant au fur et à mesure de l'utilisation jusqu'à concurrence bien entendu d'un montant maximal, soit l'utilisateur affiche lui-même directement ou indirectement le montant de la prestation qu'il veut recevoir, par exemple pour l'achat d'un objet ou pour acquitter une taxe de stationnement et si le montant disponible dans la mémoire de la carte, la machine de traitement va diminuer d'autant le montant encore disponible dans la mémoire de la carte.

En outre, il existe différents types de carte à mémoire électronique. Le type le plus simple appelé pré-payé comporte dans sa mémoire une information identifiant la prestation qui peut être obtenue à l'aide de la carte et un certain nombre de positions mémoire qui correspondent à autant d'unité de valeurs que l'usager peut utiliser pour recevoir la prestation. Au fur et à mesure de l'utilisation de la carte, les positions de mémoire sont grillées jusqu'à ce que la totalité des positions mémoire soit utilisée. Dans d'autres cas, la carte comporte en mémoire non seulement des informations quant à la nature de la prestation accessible mais également des éléments d'identification du porteur de la carte. La carte comporte toujours des zones de mémoire pour mémoriser les montants de prestations demandées et obtenues jusqu'à épuisement du montant maximal pour laquelle la carte a été achetée. Avec de telles cartes, le plus souvent il est possible de recharger la carte pour un montant à acquitter à nouveau auprès de l'organisme prestataire de la prestation.

Quel que soit le type de prestation concernée et quel que soit le type de carte à mémoire considérée, il se pose toujours pour le détenteur de la carte le problème de connaître au moins approximativement le montant du solde encore disponible dans la carte pour obtenir une nouvelle prestation puisque, par définition, ce solde n'est pas directement lisible par l'utilisateur. Certes les dispositifs de traitement comportent en général des moyens d'affichage d'information et notamment d'affichage du montant du solde encore disponible dans la carte.

Cependant, le détenteur de la carte en dehors de cette circonstance particulière n'a pas le moyen de connaître le montant de ce solde disponible. Cela est particulièrement gênant pour l'usager pour décider le moment auquel il doit acquérir une nouvelle carte dans le cas de cartes du type pré-payé ou au moment où il doit faire recharger sa carte à une nouvelle valeur fiduciaire dans le cas de cartes rechargeables.

Le brevet français No. 2 485 771 décrit une carte du type à piste magnétique dans laquelle on a prévu sur le corps de la carte un tracé rectiligne réalisé en un matériau propre à prendre deux aspects différents selon qu'il a subi ou non un traitement.

Selon ce brevet, le matériau est constitué par un métal brulâble ou claquable comme cela est utilisé sur certaines imprimantes. Cependant, une telle solution nécessite une énergie électrique qui, au moins dans le cas des téléphones à carte, n'est pas disponible. En outre, l'opération de claquage nécessite un déplacement relatif précis de la carte par rapport aux électrodes de claquage en fonction de l'information à imprimer. Cette solution est facilement compatible avec des cartes à mémoire magnétique dans lesquelles le lecteur comporte des moyens de déplacement de la carte à vitesse contrôlée. En revanche, dans le cas des lecteurs de carte à mémoire électronique, l'introduction de la carte est soit manuelle, soit à vitesse non contrôlée puisque le traitement de la carte proprement dit est bien sûr effectué lorsque celle-ci est immobile.

Un objet de la présente invention est de fournir une carte à mémoire électronique comportant des moyens d'affichage au moins approximatifs du solde encore disponible dans la mémoire qui soient compatibles avec des lecteurs de carte statiques et qui, en outre, ne nécessite pas une source d'alimentation électrique élevée.

Pour atteindre ce but, une carte à mémoire électronique avec affichage de la consomation du solde disponible dans la mémoire, selon l'invention, comprend un corps de carte, un module électronique raccordé à une pluralité de plages externes de contact électrique et elle se caractérise en ce qu'elle comprend en outre une pluralité de zones alignées disposées dans une face principale du corps de carte, lesdites zones étant raccordées électriquement à deux bornes de contact électrique accessibles dans ladite face, chaque zone étant telle qu'après l'application d'un signal électrique sur lesdites bornes l'aspect de la zone visible dans ladite face principale soit modifiée de façon permanente, les applications successives de signaux électriques provoquant la modification des zones successives dans l'ordre où elles sont alignées.

Selon un mode préféré de mise en oeuvre, chaque zone d'affichage est constituée par une cellule électrolytique, ces cellules étant montées en parallèle entre deux conducteurs respectivement reliés auxdites bornes.

De toute manière, l'invention sera mieux comprise à la lecture de la description qui suit d'un mode préféré de réalisation de l'invention donné à titre d'exemple non limitatif. La description se réfère aux figures annexées sur lesquelles :
- la figure 1 est une vue de dessus d'une partie d'un corps de carte montrant les moyens d'affichage du solde disponible;
- la figure 2 est une vue en coupe selon la ligne II-II de la figure 1 montrant la structure des moyens d'affichage ; et
- la figure 3 est un schéma électrique équivalent de l'ensemble des zones d'affichage de la consommation.

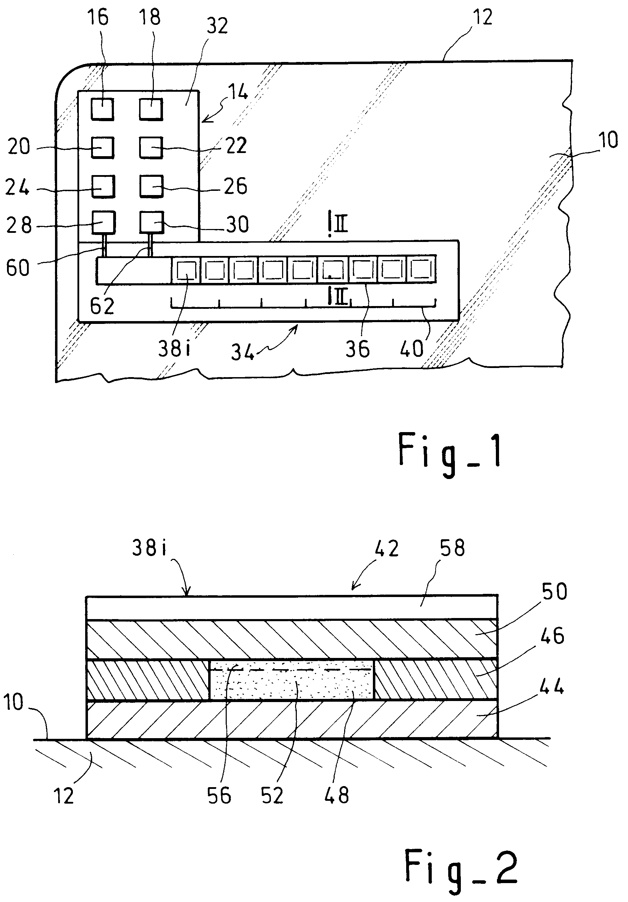

En se référant tout d'abord à la figure 1, on va décrire l'ensemble de la carte à mémoire selon l'invention. Sur cette figure, on a représenté une partie de la face avant 10 du corps de carte 12. Comme cela est bien connu, la face 10 du corps de carte comporte un module électronique 14 dont on a représenté les plages externes de contact électrique référencées 16, 18, 20, 22, 24, 26, 28 et 30. Ces plages de contact électrique 16 à 30 sont déposées sur un support isolant 32. Chaque plage de contact électrique 16 à 26 est reliée à un circuit intégré fixé sur le recto du support isolant 32, ce circuit intégré comportant notamment la mémoire électronique de la carte. Les plages externes de contact électrique 16 à 26 sont destinées à établir une liaison électrique, lorsque la carte est introduite dans un lecteur de carte entre le circuit électronique de la carte et les circuits de traitement du lecteur de carte. Selon le mode de réalisation envisagé, les plages externes de contact électrique 28 et 30 ne sont pas utilisées pour le circuit intégré. Selon l'invention, la carte comporte de plus dans sa face avant 10 un dispositif d'affichage du solde encore disponible dans la mémoire de la carte, ce dispositif portant la référence générale 34. Le dispositif se présente sous la forme d'une bande allongée 36 constituée par une succession de zones d'affichage 38i. Une échelle graduée 40 permet de repérer chacune des zones d'affichage 38i. Le dispositif 34 permet d'afficher de façon directement visible pour l'utilisateur de la carte, la consommation des unités contenues initialement dans la mémoire. Si par exemple, il y a dix zones d'affichage 38i, chaque zone correspond à 10% du contenu total de la mémoire.

La figure 2 montre un mode préféré de réalisation des zones d'affichage 38i. Chaque zone consiste en une cellule électrolytique 42. L'ensemble des cellules 42 constituant les zones d'affichage 38i. Immédiatement au-dessus du matériau constituant le corps de carte 12, on trouve un premier dépot conducteur de très faible épaisseur 44 constituant une première électrode de la cellule électrolytique. Au-dessus on trouve une couche de matériau isolant 46 percée de cavités 48 définissant la cellule électrolytique proprement dite. Au-dessus du matériau isolant et fermant de façon étanche les cavités 48, on trouve une deuxième électrode transparente 50. Chaque cavité 48 est remplie par un électrolyte 52. On choisit un électrolyte tel que, lorsqu'on a soumis l'électrolyte à une tension convenable appliquée entre les électrodes 44 et 50, l'électrolyte provoque un dépôt métallique 56 sur la face interne de l'électrode transparente 50 de telle manière que vu de l'extérieur l'aspect externe de la cellule soit modifié de façon visible à travers l'électrode transparente 50. Enfin, l'électrode 50 est recouverte par un vernis de protection 58.

Toutes les couches représentées sur la figure 2, à savoir l'électrode inférieure 44, la couche isolante 46 et l'électrode transparente supérieure 50, ont une épaisseur très réduite de l'ordre de 10 microns. Lors de l'application de la tension, le courant passe verticalement entre les électrodes 44 et 50 qui sont très proches ; donc le dépôt du métal résultant de l'électrolyse est rapide même si l'électrolyte se présente sous forme gélifiée. En outre, la quantité de courant nécessaire à l'électrolyse est faible car l'électrolyte ne contient que la quantité d'ions nécessaires à déposer environ 10 nanomètres de métal sur la face interne de l'électrode transparente 50, ce qui suffit pour obtenir une couche opâque.

L'électrode 44 inférieure s'étend en dessous de l'ensemble des cellules 42 constituant les zones 38i et est reliée électriquement, par exemple par le dépôt conducteur 60, à la plage de contact externe 28. De la même manière, l'électrode transparente supérieure 50 qui s'étend au-dessus de l'ensemble des cellules 38i et est reliée par un dépôt conducteur 62 à la plage externe de contact électrique 30. On obtient ainsi une suite de cellules électrolytiques montées en parallèles entre les éléments conducteurs 44 et 50.

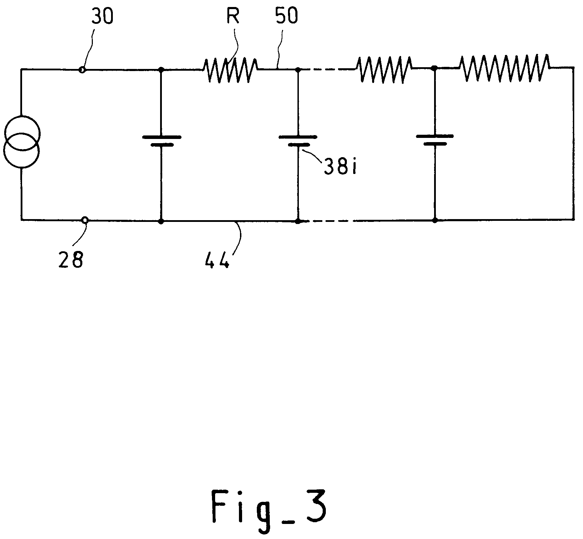

La figure 3 donne le schéma électrique équivalent à l'ensemble des cellules électrolytiques 42. Sur ce schéma, on voit que les électrodes supérieures proprement dites 50 des cellules 42 sont reliées entre elles par une zone résistive R. Les zones résistives R sont constituées soit directement par le matériau formant l'électrode supérieure 50 (par exemple oxyde d'étain-indium), soit par un matériau résistant spécifique.

Le fonctionnement du dispositif d'affichage est le suivant. L'électrolyte remplissant les cellules 42 a un comportement non-linéaire. Le courant dans la cellule augmente rapidement si la tention entre les électrodes 44 et 50 dépasse une certaine valeur. La cellule vierge la plus en amont, c'est-à-dire la plus proche des bornes 28, 30, limite la tension à ces bornes à une valeur peu supérieure à sa force électromotrice. Du fait du diviseur de tension constitué par les résistances R, les cellules en aval de la première cellule vierge voient sur leurs bornes une tension inférieure à leur force contre-électromotrice et le courant ne les traverse pas. C'est donc bien l'état de la première cellule vierge 38i qui va être modifié. En outre, lorsqu'une cellule est consommée, elle devient isolante et la tension peut monter à ses bornes, ainsi que sur les bornes de cellules aval. Cependant, comme on l'a déjà expliqué, c'est la première cellule vierge qui sera consommée. L'empilage correspondant à l'ensemble d'une série de cellules peut être réalisée en grand nombre sur un même support de grande surface par les procédés habituels des couches minces. Puis chaque barrette de cellules est découpée et reportée par un moyen convenable sur la face 10 du corps de carte 12.

On comprend qu'il est nécessaire que le lecteur de carte comporte des moyens pour comparer le nombre d'unités consommées à des seuils successifs correspondant à des fractions de la capacité totale de la mémoire. A chaque franchissement d'un seuil, le lecteur de cartes applique un signal électrique sur les bornes 28, 30 de la carte pour provoquer le changement d'état de la cellule 38i suivante. Le brevet européen No. 0 241 379 au nom de la demanderesse décrit de tels circuits.

## Revendications

1. Carte à mémoire électronique avec affichage de la consomation du solde disponible dans la mémoire comprenant un corps de carte (12), un module électronique (14) raccordé à une pluralité de plages externes de contact électrique (16, 30), caractérisée en ce qu'elle comprend en outre une pluralité de zones d'affichage (38i) alignées disposées dans une face principale (10) du corps de carte, lesdites zones étant raccordées électriquement à deux bornes de contact électrique (28, 30) accessibles dans ladite face, chaque zone étant telle qu'après l'application d'un signal électrique sur lesdites bornes l'aspect de la zone visible dans ladite face principale soit modifiée de façon permanente, les applications successives de signaux électriques provoquant la modification des zones successives dans l'ordre où elles sont alignées.

2. Carte à mémoire électronique selon la revendication 1, caractérisée en ce que chaque zone d'affichage (38i) est constituée par une cellule électrolytique (42), lesdites cellules étant montées en parallèles entre lesdites bornes externes (28, 30).

3. Carte à mémoire électronique selon la revendication 2, caractérisée en ce que chaque cellule électrolytique comprend une électrode supérieure (50) qui est transparente et une électrode inférieure (44) qui est disposée sur ladite face principale (10) du corps de carte (10).

4. Carte à mémoire électronique selon la revendication 3, caractérisée en ce que les électrodes supérieures (50) sont reliées électriquement entre elles par des zones résistives (R).
